# EUROPEAN PATENT SPECIFICATION

(11) **EP 1 472 479 B1**
(45) Date of publication and mention of the grant of the patent: **27.09.2006**
(21) Application number: 02715288.3
(22) Date of filing: 07.02.2002
(51) Int. Cl.: F16J 15/34

(54) **AN ADJUSTABLE LEAK DEVICE FOR A ROTATING SHAFT**
EINSTELLBARE LECKAGEVORRICHTUNG FÜR ROTIERENDE WELLEN
DISPOSITIF DE FUITE REGLABLE POUR ARBRE ROTATIF

(43) Date of publication of application: 03.11.2004
(73) Proprietor: Wright, Andrew, Amsterdam, 2375 Mphumalanga (ZA)
(72) Inventor: OPPERMANN, Marthinus, Johannes, Lillyvale, Benoni, 1500 Gauteng (ZA)
(74) Representative: Vossius & Partner
(86) International application number: PCT/ZA2002/000018
(87) International publication number: WO 2003/067129

(56) References cited:
- WO-A-01/46607
- FR-A- 685 846
- GB-A- 2 012 378
- US-A- 4 406 465
- US-B1- 6 186 510

## Description

This invention relates to a device for controlling a leak of fluid from a reservoir over a rotating shaft, which extends into the reservoir.

Various seals and sealing methods exist in the art of preventing the leak of fluid from a reservoir past a rotating shaft, which extends into the reservoir. The main methods used in the art are to use packed seals and mechanical seals. Packed seals rely on a seal formed between the packed material and the shaft and mechanical seals on a seal formed between a sealing surface of abrasion resistant material and a wear face defined by a flange extending from the shaft. The packing material of the packed seal is compressed against the shaft and the resulting friction requires additional energy to rotate the shaft and causes high wear on the shaft. The sealing surface of the mechanical seal is spring loaded or urged against the wear surface also causing high wear of the sealing surfaces. In addition, the mechanical seal and packed seal can also employ pressurised fluid which flows from the outside of the reservoir past the shaft into the reservoir for cooling, lubrication and to prevent leak of fluid from a reservoir past a rotating shaft. This method of lubrication can be mechanically complicated and may contaminate the fluid inside the reservoir. Normally, if the lubrication stops, the seal seizes with catastrophic results. Seizing may also occur during start up if the sealing surface has bonded to the wear surface due to abrasives suspended in the fluid, crystallization, setting or curing of substances in suspension or solution. It will be appreciated that, a corrosive or abrasive fluid inside the reservoir will exaggerate the problems highlighted with existing seals. In FR 685 846 and in a previous application PCT No. PCT/ZA00/00242 (Publication number WO 0146607 A1) the applicants described a mechanical seal in which a sealing surface is urged against a wear surface, which suffers with the problems discussed above.

According to the invention there is provided a device as claimed in claim 1 and its dependend claims for controlling a leak of fluid through an opening in a wall over a rotating shaft, which rotating shaft extends through the opening.

The wall may be any wall, which separates a liquid and a gas medium. Typically, the wall may be a wall of a reservoir or a wall of a housing, such as a pump housing, located inside the reservoir.

Typically the shaft and the member may be circular in cross section.

The adjustment means includes a fixture axially mountable about the member, the member and fixture having complementary threads such that rotational movement of the member causes axial displacement of the member. The adjustment means may then include any mechanical advantage means for rotating the member. In one embodiment, the member may be provided with a co-axial annular gear and the mechanical advantage means being in the form of a worm engaging the annular gear.

The adjustment means may include a housing for rotatably housing the worm. The housing may be fastened to the fixture. The worm may further be axially slideable along its axis in the housing and the adjustment means may then include an obstruction means for obstructing or inhibiting slideable movement of the worm such that the annular gear can be operatively rotated by rotating the worm. The obstruction means may include a locking means to obstruct slideable movement of the worm in a first, decreased gap, adjustment, direction and slideable movement of the worm in a second, opposite, increased gap, direction. The obstruction of slideable movement of the worm in the first and second adjustment directions allows the rotation of the member, respectively, to adjustably decrease the leak gap between the working surface of the member and the working surface of the flange and to adjustably increase the gap.

Instead, the obstruction means may include an urging means which allow slideable movement of the worm in the second, increased gap, direction, against the urging means. The pitch of the complementary threads of the member and fixture is selected such that, when a rotational force in the second, increased gap, direction is experienced by the member which cause rotational movement of the member against the urging means of the obstruction means, axial movement in the increased gap direction of the member will result.

It will be appreciated that, in the event that the working surface of the member and the working surface of the flange adhere together, the rotation of the shaft will apply a rotating force to the member to rotate against the urging means of the obstruction means of the blocking means to cause axial movement of the member to urge the working surfaces apart to prevent the working surfaces from seizing together. Once the working surfaces are urged apart, the urging means of the obstruction means will urge the member back into its adjusted gap position.

In use, the device will be mounted about a rotating shaft, the shaft extending into a reservoir and having a flange, which extends transversely therefrom. The device is mounted such that the generally stationary working surface of the adjustable member and the rotating working surface of the flange are in close proximity axially opposite each other. The member is then axially adjusted until the leak gap allows a desired leak rate of fluid from the reservoir.

The device may include a second adjustable member similar to the first adjustable member.

The second adjustable member may be coaxially mountable about the shaft, the member also being axially adjustable and having a generally stationary working surface oppositely spaced from a corresponding rotating working surface of the flange which extends transversely from the shaft such that a second adjustable leak gap is defined between the working surface of the second member and the corresponding surface of the flange, and an adjustment means for axially adjusting the second member, thereby adjusting the second adjustable leak gap. The second member may be coaxially screw threadedly received inside the first member such that the adjustment means for axially adjusting the second member may be similar to the adjusting means for the first member and such that the working surface of the first member and the working surface of the second member cooperate to define a first outer adjustable leak gap and a second inner adjustable leak gap. It will be appreciated that the second member protects the shaft against undue exposure to leaked fluid.

It will be appreciated by those skilled in the art that forces, other than axial forces, also known as forces which cause shaft whip, which act on a rotating shaft may cause transverse movement of the shaft and its flange. In order to accommodate any transference of non axial movement from the rotating surface of the flange and the generally stationary working surfaces of the first and/ or second members, and to ensure a constant leak rate, the first and/ or second members may be provided with a universal type joint, which extends between the working surface and the annular gear.

A universal type joint shall be understood to be a coupling of two parts, the coupling being able to accommodate movement of one or both parts in and out of axial alignment and transmit rotary power from one part to the other.

The device may further include a seal between the first member and the wall. The seal may include an outer annular part with an outwardly facing sealing surface, which sealingly bears against an opposed surface of the wall or a fixture thereto, and an inner annular part with an inwardly facing sealing surface, which sealingly bears against an opposed surface of adjustable member. An outer diameter of the outer part may be larger than the outer diameter of the inner part and the inner diameter of the inner part may be smaller than the inner diameter of the outer part. Then, the inner diameter of the outer part is smaller than outer diameter of the inner part and the parts may abut annularly along opposed surfaces on the parts. The seal further includes an urging means for sealingly urging the abutting surfaces together while still allowing movement of the parts along the abutting surfaces relative to each other. The urging means may be one or more screw threaded or spring loaded studs, which bear against the parts. The outwardly facing surface of the outer part may define an annular groove for locating an o-ring and the inwardly facing surface of the inner part may define an annular groove for locating an o-ring. It will be appreciated that such a seal, which is configured to accommodate shaft whip movement, may be used in known mechanical seals, and is therefore a second aspect of the invention.

The fixture may have an annular channel defined on the inside thereof and an outlet defined therein for collecting and dispensing any fluid, which leaks from the reservoir through the opening defined in the wall over the rotating shaft. It will be appreciated that, in use, the rate of fluid dispensed from the outlet is proportional to the size of the adjustable leak gap, and the gap can be adjusted accordingly.

The fixture may also have an inlet defined therein for flushing the shaft and the, or each member with a cleaning fluid when desired.

The end of the second, inner, member opposite its working surface may be sealed against the rotating shaft such that the device forms a chamber for containing collected fluid until it has been drained from the device.

The chamber also facilitates flushing of the device during operation.

A method for managing a leak of fluid from a reservoir past a rotating shaft, which extends into the reservoir, includes the step of mounting a device about a rotating shaft, the device defining an adjustable leak gap, as described above.

The invention is now described by way of example with reference to the accompanying drawings.

In the drawings:
Figure 1 shows a sectional side view of a device for controlling a leak of fluid through an opening in a wall over a rotating shaft, in accordance with the invention;
Figure 2 shows a three-dimensional exploded view of the device;
Figure 3 shows a part sectional front three-dimensional view of the device; and
Figure 4 shows a part sectional rear three-dimensional view of the device.

Referring now to the drawings, the device for controlling a leak of fluid through an opening in a wall over a rotating shaft, in accordance with the invention, is generally indicated by reference numeral 10.

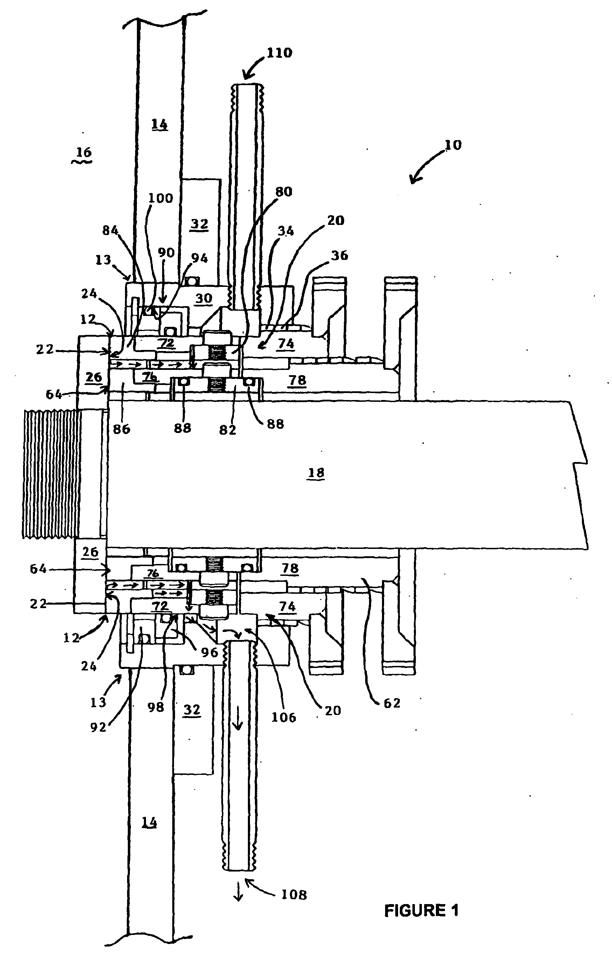

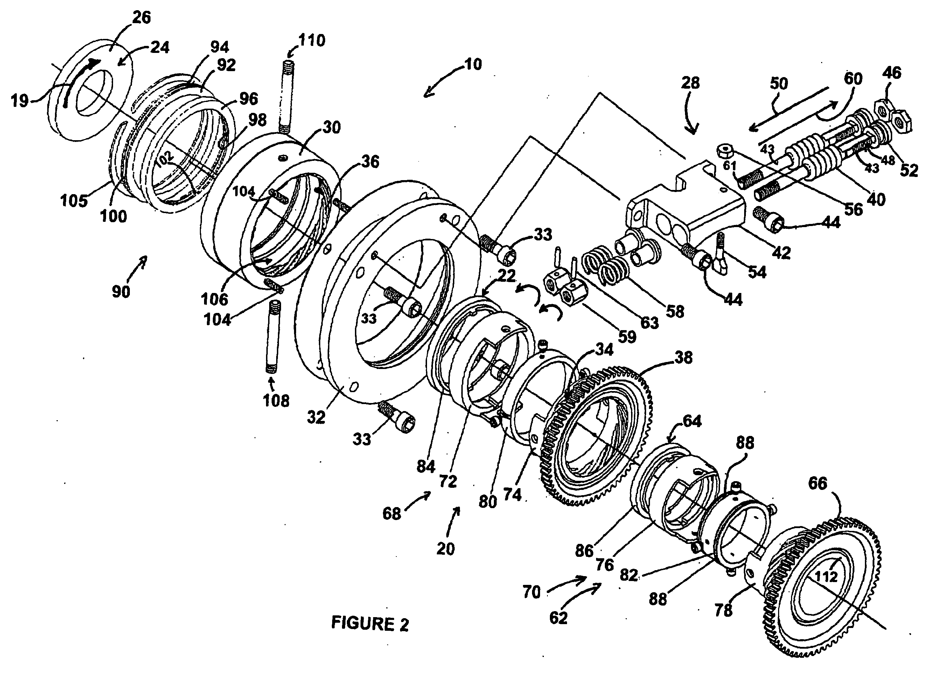

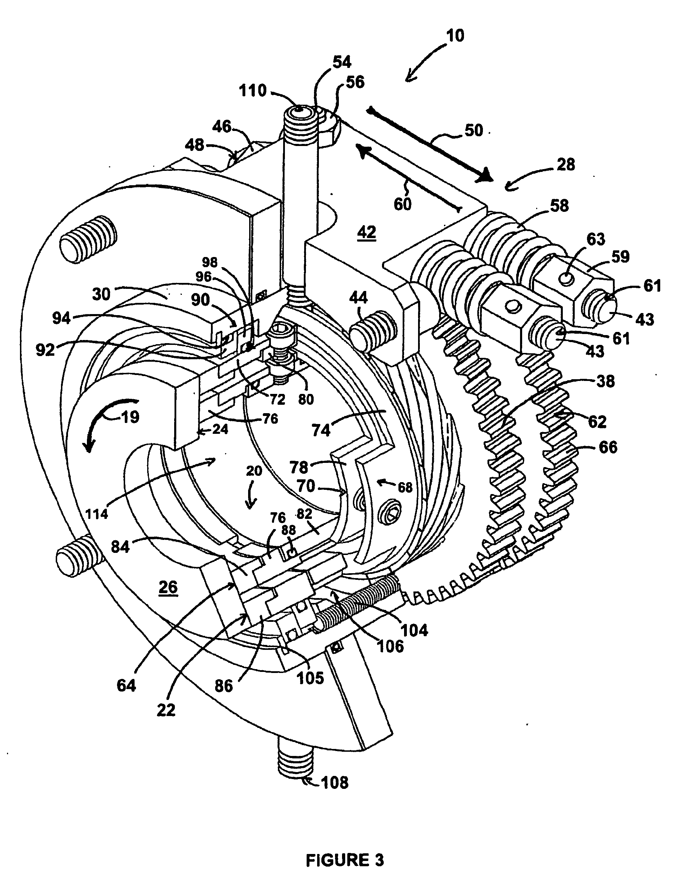

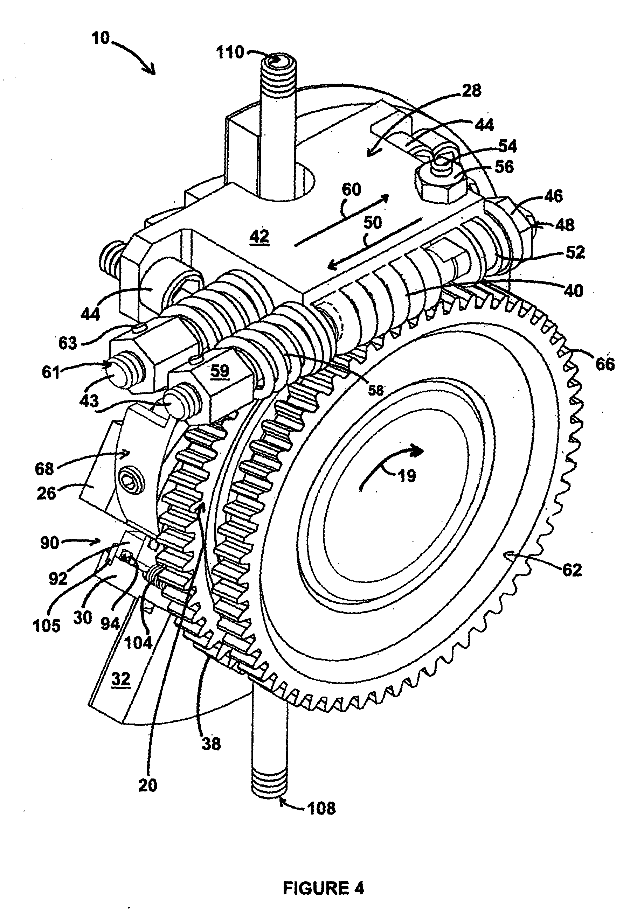

The device 10 can, for example, be used to control a leak of water (indicated in Figure 1 by the arrows marked 12) through an opening 13 in a wall 14 of a water containing reservoir 16 over a rotating pump shaft 18, which rotating shaft 18 rotates in the direction of the arrow 19 and extends through the opening 13 into the reservoir 16. For the sake of clarity, the shaft 18 is not shown in Figures 2 to 4.

The device 10 includes a first adjustable member 20, which is coaxially mounted about the shaft 18 to the wall 14. The member 20 is axially adjustable and has a generally stationary working surface 22 spaced from a corresponding rotating working surface 24 of a flange 26, which extends transversely from the shaft 18 such that an adjustable leak gap is defined between the stationary working surface 22 and the corresponding rotating working surface 24 to control the leak of water 12 through the opening 13.

The device 10 further includes an adjustment means generally indicated by reference numeral 28 for axially adjusting the member 20, thereby adjusting the adjustable leak gap and the rate of water leaking through the opening 13. The adjustment means 28 includes a fixture 30, sealably mounted to the wall 14, by means of the flange 32, and axially about the member 20. The flange 32 is bolted to the wall 14 by means of bolts 33. It will be appreciated that, in other embodiments of the invention, the flange 26, fixture 30 and/ or wall 14 can be integrally formed. The member 20 and fixture 30 has complementary threads 34 and 36, respectively, such that rotational movement of the member 20 causes axial displacement of the member 20. The adjustment means 28 further includes a mechanical advantage means for rotating the member 20 relative to the fixture 30. In this embodiment, the member 20 is provided with a co-axial annular gear 38 and the mechanical advantage means is in the form of a worm 40 engaging the annular gear 38. The adjustment means 28 also includes a housing 42 for rotatably housing the worm 40. A shaft 43 extends coaxially through and is fast with the worm 40. The housing 42 is fastened to the flange 32 with two bolts 44. The worm 40 is axially slideable along its axis in the housing 42 and the adjustment means 28 includes an obstruction means for obstructing or inhibiting slideable movement of the worm 40 such that the annular gear 38 can be operatively rotated by rotating the worm 40. The obstruction means includes a locking means in the form of a nut 46 screw threadedly received at a first end 48 of the shaft 43 to obstruct slideable movement of the worm 40 in a first, decreased gap, adjustment, direction, indicated by arrow 50. The shaft 43 passes slideably through a shaft guide 52. The shaft guide 52 is kept in position in the housing 42 with a locking bolt 54 and nut 56 arrangement. The obstruction means further includes an urging means 58 in the form of a coil spring, which allow slideable movement of the worm in a second, increased gap, direction indicated by the arrow 60, against the urging means 58. A nut 59 is lockable to a second end 61 of the shaft 43. The nut 46 is used to pre tension the spring 58, then locked to the second end 61 of the shaft 43 with the locking pin 63 allowing the shaft 43 and the worm 40 to be turned with the nut 59 to adjust the adjustable gap.

The obstruction of slideable movement of the worm 40 in the first 50 and second 60 adjustment directions allows rotation of the member 20 to, respectively, adjustably decrease the leak gap between the working surface 22 of the member 20 and the rotating working surface 24 of the flange 26 and to adjustably increase the gap.

The pitch of the complementary threads of the member 20 and fixture 30 is selected such that, when a rotational force in the second, increased gap, direction 60 is experienced by the member 20, which cause rotational movement of the member against the urging means 58 of the obstruction means, axial movement in the increased gap direction of the member 20 will result. It will be appreciated that, in the event that the working surface 22 of the member 20 and the working surface 24 of the flange 26 adhere together, for instance at startup of the pump, the rotation of the shaft 18 will apply a rotating force to the member 20 to rotate against the urging means 58 causing axial movement of the member 20 thereby urging the working surfaces 22 and 24 apart, preventing the working surfaces from seizing together. Once the working surfaces 22 and 24 are urged apart, no, or insufficient rotational force is applied to the member 20 and the urging means 58 will urge the member 20 back into its adjusted gap, or working position.

The device 10 includes a second adjustable member 62 similar to the first adjustable member 20. The second adjustable member 62 is also coaxially mounted about the shaft 18, the member 62 also being axially adjustable and having a generally stationary working surface 64 oppositely spaced from a corresponding rotating working surface 24 of the flange 26, which extends transversely from the shaft 18 such that a second adjustable leak gap is defined between the working surface 64 of the second member 62 and the corresponding surface 24 of the flange. The device 10 also includes an adjustment means 28 for axially adjusting the second member 62, similar to the adjusting means for the first member 20, thereby adjusting the second adjustable leak gap and like reference numerals are used to indicate like parts. The second member 62 is coaxially screw threadedly received inside the first member 20, in a similar way as the first member 20 is received inside the fixture 30, such that the adjustment means 28 for axially adjusting the second member 62 may be similar to the adjusting means 28 for the first member 20 and such that the working surface 22 of the first member 20 and the working surface 64 of the second member 62 cooperate to define a first outer adjustable leak gap and a second inner adjustable leak gap.

Forces, other than axial forces, also known as forces, which cause shaft whip, which act on a rotating shaft may cause transverse movement and/ or vibrations of the shaft and its flange. In order to accommodate any transference of non axial movement from the rotating surface 24 of the flange 26 and the generally stationary working surfaces 22 and 64 of the first and/ or second members 20 and 62, and to ensure a constant leak rate, the first and/or second members 20 and 62 are provided with a universal type joint 68 and 70, respectively, which extends between each working surface 22 and 64 and its respective annular gear 38 and 66. Each joint 68 and 70 includes two oppositely facing swivel parts, 72 and 74 for the first, outer, member and 76 and 78 for the second, inner, member, swivelably mounted at right angles relative to each other to and over respective mounting rings 80 and 82. One swivel part 72 and 76 of each joint 68 and 70, respectively, is connected to a respective ring 84 and 86, each having its respective working surface 22 and 64. Two o-rings 88 seal the outer surface of the ring 86 against the respective inner surfaces of the parts 76 and 78 to minimise the shaft 18 to exposure to leaked water.

The device 10 further includes a seal generally indicated by numeral 90 between the first member 20 and the fixture 30, which in turn is sealingly mounted to the wall 14. The seal 90 includes an outer annular part 92 with an outwardly facing sealing surface 94, which sealingly bears against an opposed surface of the fixture 30, and an inner annular part 96 with an inwardly facing sealing surface 98, which sealingly bears against an opposed surface of the swivel part 72 of the adjustable member 20. The outwardly facing surface 94 of the outer part 92 defines an annular groove for locating an o-ring 100 and the inwardly facing surface of the inner part 96 defines an annular groove for locating an o-ring 102. An outer diameter of the outer part 92 is larger than the outer diameter of the inner part 96 and the inner diameter of the inner part 96 is smaller than the inner diameter of the outer part 92. Then, the inner diameter of the outer part 92 is smaller than outer diameter of the inner part 96 and the parts 92 and 96 abut annularly along opposed surfaces on the parts 92 and 96. The seal 90 further includes an urging means in the form of screw threaded studs 104 received in threaded apertures defined in the fixture 30 for sealingly urging the abutting surfaces together while still allowing some movement of the parts 92 and 94 along the abutting surfaces relative to each other. A ring 105, of which an outer portion fits inside a groove defined in the inner surface of the fixture 30 adjacent the outer part keeps the parts 92 and 96 in position. It will be appreciated that the seal 90 is configured to accommodate shaft whip movement and/ or vibrations.

The fixture 30 has an annular channel 106 and an outlet 108 defined therein for collecting and dispensing any water, which leaks from the reservoir 16 through the opening 13 defined in the wall 14 over the rotating shaft indicated by the arrows 12. It will be appreciated that, in use, the rate of water dispensed from the outlet 108 is proportional to the size of the adjustable leak gap, and the gap can be adjusted accordingly.

The fixture also has an inlet 110 defined therein for flushing the channel 106, each member 20 and 62 and other parts with a cleaning fluid when desired.

## Claims

1. A device for controlling a leak of fluid through an opening in a wall (14) over a rotating shaft (18), which rotating shaft extends through the opening, the device including:
a first adjustable member (20) ajustably mountable to the wall, the member includes a generally stationary working surface (22) spaced from a rotating working surface (24) which rotates with the shaft such that an adjustable leak gap is defined between the stationary and the rotating working surfaces to control the leak of fluid through the opening, wherein the adjustable member (20) is coaxially mountable about the shaft (18), the member (20) being axially adjustable with its working surface (22) spaced from a corresponding rotating working surface (24) of a flange (26) which extends transversely from the shaft, **characterized in that** the device includes:
an adjustment means (28) for axially adjusting the member, thereby adjusting the adjustable leak gap, wherein the adjustment means (28) includes a fixture (30) axially mountable about the member (20), the member (20) and fixture (30) having complementary threads (34,36) such that rotational movement of the member (20) causes axial displacement of the member (20).

2. A device as claimed in claim 1, in which the adjustment means (28) includes a mechanical advantage means for rotating the member and in which the member is provided with an annular gear (38), co-axial with the shaft, the mechanical advantage means being in the form of a worm (40) engaging the annular gear.

3. A device as claimed in any one of claims 1 to 2, which includes a second adjustable member (62) coaxially received inside the first adjustable member (20) about the shaft (18), the second member being axially adjustable and having a generally stationary working surface (64) oppositely spaced from a corresponding rotating working surface of the flange (26) which extends transversely from the shaft (18) such that a second adjustable leak gap is defined between the working surface of the second member and the corresponding surface of the flange.

4. A device as claimed in claim 3, which includes an adjustment means (28) for axially adjusting the second member, thereby adjusting the second adjustable leak gap.

5. A device as claimed in any one of claims 1 to 4, in which the first (20) and/ or second (62) adjustable members is provided with a universal type joint (68, 70).

6. A device as claimed in any one of claims 1 to 5, which include a seal (90) between the first adjustable member (20) and the wall, the seal including an outer annular part (92) with an outwardly facing sealing surface (94), which sealingly bears against an opposed surface of the wall or a fixture thereto, and an inner annular part (96) axially aligned with the outer annular part and with an inwardly facing sealing surface (98), which sealingly bears against an opposed surface (72).

7. A device as claimed in claim 6, in which the seal (90) includes an urging means (104) for sealingly urging abutting surfaces of the annular parts together while still allowing movement of the parts (92, 94) along the abutting surfaces relative to each other.

## Patentansprüche

1. Vorrichtung zur Kontrolle eines Flüssigkeitslecks durch eine Öffnung in einer Wand (14) über einer Drehwelle (18), wobei sich die Drehwelle durch die Öffnung hindurch erstreckt und die Vorrichtung folgendes aufweist:
ein erstes einstellbares Element (20), das verstellbar an der Wand befestigt werden kann, wobei das Element eine im Allgemeinen feststehende Arbeitsfläche (22), im Abstand zu einer sich drehenden Arbeitsfläche (24), besitzt, die sich derart mit der Welle dreht, dass ein einstellbarer Leckspalt zwischen der feststehenden und der sich drehenden Arbeitsfläche gebildet wird, um das Lecken einer Flüssigkeit durch die Öffnung hindurch zu kontrollieren, wobei das einstellbare Element (20) koaxial auf der Welle (18) angebracht werden kann, wobei das Element (20) axial zu seiner Arbeitsfläche (22) eingestellt werden kann, beabstandet von einer entsprechenden, sich drehenden Arbeitsfläche (24) eines Flansches (26), der quer von der Welle weg verläuft, **dadurch gekennzeichnet, dass** die Vorrichtung
eine Einstelleinrichtung (28) zum axialen Einstellen des Elements aufweist, wodurch der einstellbare Leckspalt eingestellt wird, wobei die Einstelleinrichtung (28) eine Feststelleinrichtung (30) aufweist, die axial um das Element (20) angebracht werden kann, wobei das Element (20) und die Feststelleinrichtung (30) aufeinander abgestimmte Gewinde (34, 36) aufweisen, so dass eine Drehbewegung des Elements (20) eine axiale Verschiebung des Elements (20) bewirkt.

2. Vorrichtung gemäß Anspruch 1, wobei die Einstelleinrichtung (28) eine mechanische Kraftverstärkungseinrichtung zum Drehen des Elements aufweist und wobei das Element mit einem Zahnkranz (38), koaxial zur Welle, ausgestattet ist, wobei die mechanische Kraftverstärkungseinrichtung in der Form einer Schnecke (40) ausgebildet ist und in den Zahnkranz eingreift.

3. Vorrichtung gemäß einem der vorangegangenen Ansprüche 1 bis 2, welche ein zweites einstellbares Element (62) aufweist, welches koaxial innerhalb des ersten einstellbaren Elements (20) um die Welle (18) aufgenommen wird, wobei das zweite Element axial verstellbar ist und eine im Allgemeinen feststehende Arbeitsfläche (64) aufweist, die gegenüberliegend von einer entsprechenden, sich drehenden Arbeitsfläche des Flansches (26) beabstandet ist, der quer von der Welle (18) so verläuft, dass ein zweiter verstellbarer Leckspalt zwischen der Arbeitsfläche des zweiten Elements und der entsprechenden Flanschoberfläche gebildet wird.

4. Vorrichtung gemäß Anspruch 3, welche eine Einstelleinrichtung (28) zur axialen Einstellung des zweiten Elements aufweist, wodurch der zweite einstellbare Leckspalt eingestellt wird.

5. Vorrichtung gemäß einem der vorangegangenen Ansprüche 1 bis 4, wobei das erste (20) und/oder zweite (62) einstellbare Element mit einer Art Universalgelenk (68,70) versehen ist.

6. Vorrichtung gemäß einem der vorangegangenen Ansprüche 1 bis 5, welche eine Dichtung (90) zwischen dem ersten einstellbaren Element (20) und der Wand aufweist, wobei die Dichtung ein äußeres ringförmiges Teil (92) mit einer nach außen gerichteten Dichtungsfläche (94) umfasst, welche sich dichtend an der gegenüberliegenden Wandfläche oder einer Feststelleinrichtung an dieser abstützt, und ein inneres ringförmiges Teil (96), das axial zu dem äußeren ringförmigen Teil und einer nach innen gerichteten Dichtfläche ausgerichtet ist, welche sich dichtend an der gegenüberliegenden Oberfläche (72) abstützt.

7. Vorrichtung gemäß Anspruch 6, worin die Dichtung (90) eine Andrückeinrichtung (104) besitzt, um aneinanderstoßende Flächen der ringförmigen Teile dichtend zusammenzudrücken, wobei es den Teilen (92, 94) entlang der aneinanderangrenzenden Flächen relativ zueinander nach wie vor ermöglicht wird, sich zu bewegen.

## Revendications

1. Dispositif permettant de réguler une fuite de fluide à travers une ouverture au niveau d'une paroi (14) au-dessus d'un arbre rotatif (18), ledit arbre rotatif s'étendant à travers l'ouverture, le dispositif comprenant:
un premier élément réglable (20) pouvant être monté de manière réglable sur la paroi, ledit élément présentant une surface de travail (22) généralement fixe, éloignée d'une surface de travail (24) rotative qui tourne avec l'arbre de sorte qu'un espace de fuite réglable est défini entre les surfaces de travail fixe et rotative afin de réguler la fuite de fluide à travers l'ouverture; dans ce dispositif l'élément réglable (20) peut être monté coaxialement autour de l'arbre (18), l'élément (20) étant axialement réglable par rapport à sa surface de travail (22), éloignée d'une surface de travail (24) rotative correspondante d'un rebord (26), s'étendant transversalement à partir de l'arbre, **caractérisé en ce que** le dispositif comprend:
un moyen de réglage (28) pour régler l'élément axialement, ce qui permet de régler l'espace de fuite réglable; dans ce dispositif le moyen de réglage (28) comprend un élément de fixation (30) pouvant être monté axialement autour de l'élément (20), l'élément (20) et l'élément de fixation (30) comportant des filetages (34, 36) complémentaires de sorte qu'un mouvement rotatif de l'élément (20) provoque un déplacement axial de l'élément (20).

2. Dispositif selon la revendication 1, dans lequel le moyen de réglage (28) comprend un organe mécanique renforçant la puissance, permettant de tourner l'élément et dans lequel l'élément est muni d'une couronne dentée (38), qui se présente de manière coaxiale par rapport à l'arbre, l'organe mécanique renforçant la puissance se présentant sous la forme d'une vis sans fin (40), qui entre en prise avec la couronne dentée.

3. Dispositif selon l'une quelconque des revendications 1 à 2, comprenant un deuxième élément réglable (62), reçu de la manière coaxiale à l'intérieur du premier élément réglable (20) autour de l'arbre (18), le deuxième élément étant réglable de manière axiale et présentant une surface de travail (64) généralement fixe, disposée sur le côté opposé à distance d'une surface de travail rotative correspondante du rebord (26), s'étendant transversalement à partir de l'arbre (18) de sorte qu'un deuxième espace de fuite réglable est défini entre la surface de travail du deuxième élément et la surface correspondante du rebord.

4. Dispositif selon la revendication 3, comprenant un moyen de réglage (28) permettant le réglage axial du deuxième élément, réglant ainsi le deuxième espace de fuite réglable.

5. Dispositif selon l'une quelconque des revendications 1 à 4, dans lequel les premier (20) et/ou deuxième (62) éléments réglables est/sont muni(s) d'un joint (68, 70) type universel.

6. Dispositif selon l'une quelconque des revendications 1 à 5, comprenant un joint d'étanchéité (90) entre le premier élément réglable (20) et la paroi, le joint d'étanchéité comprenant un élément annulaire extérieur (92) avec une surface d'étanchéité (94) orientée vers l'extérieur, s'appuyant de manière étanche contre une surface opposée de la paroi ou un élément de fixation, et un élément annulaire intérieur (96), aligné axialement sur l'élément annulaire extérieur et une surface d'étanchéité (98) orientée vers l'intérieur, s'appuyant de manière étanche contre une surface (72) opposée.

7. Dispositif selon la revendication 6, dans lequel le joint d'étanchéité (90) comprend un moyen de sollicitation (104) permettant, de manière étanche, de rapprocher les surfaces étant en contact l'une avec l'autre des éléments annulaires tout en permettant toujours un mouvement des éléments (92, 94), l'un par rapport à l'autre, le long des surfaces mises bout à bout.
